# EUROPÄISCHE PATENTSCHRIFT

(11) **EP 4 498 063 B1**
(45) Veröffentlichungstag und Bekanntmachung des Hinweises auf die Patenterteilung: **14.10.2026**
(21) Anmeldenummer: 24190765.8
(22) Anmeldetag: 25.07.2024
(51) Int. Cl.: G01N 15/10, G01N 15/14, G01N 21/27, G01N 21/47, C01F 5/28

(54) **ENSEMBLE VON ZELLIMITATEN SOWIE VERFAHREN ZUM HERSTELLEN DEREN**
ENSEMBLE OF CELL IMITATION AND METHOD FOR PRODUCING THE SAME
ENSEMBLE D'IMITATION DE CELLULES ET SON PROCEDE DE PRODUCTION

(30) Priorität: 26.07.2023 DE 102023119720
(43) Veröffentlichungstag der Anmeldung: 29.01.2025
(73) Patentinhaber: Westfälische Wilhelms-Universität Münster, 48149 Münster (DE); Universität Siegen, 57076 Siegen (DE)
(72) Erfinder: Schönherr, Holger, 57258 Freudenberg (DE); Kemper, Björn, 48149 Münster (DE); Schnekenburger, Jürgen, 48149 Münster (DE); Muganda, Willis, 67063 Ludwigshafen am Rhein (DE)
(74) Vertreter: Schiweck Weinzierl Koch Patentanwälte Partnerschaft mbB

(56) Entgegenhaltungen:
- CN-A- 108 423 698
- JP-A- 2020 158 379
- KR-B1- 101 141 956
- US-A- 4 044 112
- US-A1- 2015 072 134

## Beschreibung

Die vorliegende Erfindung betrifft ein Ensemble von Zellimitat, insbesondere ein Ensemble von Zellimitat zur Verwendung als Teststandard in einem markerfreien Bildgebungsverfahren. Ferner betrifft die Erfindung ein Verfahren zum Herstellen desselben.

### Stand der Technik:

JP2020158379A offenbart ein Herstellungsverfahren von Magnesiumfluorid-Partikeln mit sphärischer Form;
CN108423698A offenbart ein Verfahren zur Herstellung von ultrafeinem Magnesiumfluorid;
US4044112A offenbart ein Verfahren zur Umwandlung von basischem Magnesiumcarbonat in reines, heißpressbares Magnesiumfluorid;
US2015/072134A1 offenbart ein Verfahren zur Herstellung von Magnesiumfluorid-Partikeln; und KR101141956B1 offenbart ein Verfahren zur Herstellung sphärischer silikaler Strukturen umfassend Magnesiumfluorid.

Labor- und Bildgebungsverfahren für GLP/GMP-Arbeiten, Diagnostik, regulatorische Fragen und laborübergreifende Kooperationen erfordern Standards zur Validierung und Kalibrierung. In der markerfreien Bildgebung und Durchflusszytometrie sind derzeit keine dauerhaften Teststandards für die Validierung und Kalibrierung bekannt.

Eine zuverlässige Kalibrierung und Validierung markerfreier Bildgebungsverfahren ist bisher nicht möglich. In der markerfreien Bildgebung gibt es derzeit keine dauerhaften Prüfstandards, die zur Kalibrierung, Optimierung und Testung in der quantitativen Phasenbildgebung (QPI), der optischen Kohärenztomographie (OCT), der Durchflusszytometrie (FCM) und der bildgebenden Durchflusszytometrie unter sehr realistischen Messbedingungen verwendet werden können. Dieser Mangel an Kalibrierungsstandards beeinträchtigt den Einsatz der innovativen markerfreien Bildgebungsverfahren in industriellen und medizinischen Anwendungen.

Derzeit gibt es kein bekanntes synthetisches Verfahren zur Herstellung monodisperser MgF₂-Perlen mit einem Durchmesser von mehr als 2 µm im Durchmesser. In dem wissenschaftlichen Artikel von Xu et al. (1) wird berichtet, dass kugelförmige Partikel in Mikrogröße mit einer breiten Größenverteilung zwischen 200 nm und 2 µm hergestellt worden sind. Zu den typischen bekannten Synthesewegen für die Herstellung von Magnesiumfluorid-Nanopartikeln und Mikrokügelchen gehören Fällung, Ammoniak-Route, Sol-Gel über Fluorwasserstoffsäure (HF) oder Acetat, mikrowellenunterstützte ionische Flüssigkeitssolvothermie, Sonifikation (Behandlung mit Ultraschall) und Synthese mit Meerwasser. Die Fällung kann verwendet, um einheitliche Magnesiumfluorid-Partikel mit unterschiedlicher Morphologie herzustellen, indem der pH-Wert und die Ionenstärke verändert werden, während die Komplexierung von Wechselwirkungsionen vermieden wird. Sphärische, kubische, prismatische und plättchenförmige kolloidale Partikel werden durch Diffusionswachstum oder Aggregation einzelner Partikel gebildet. Es ist jedoch schwierig die Partikelgröße für Partikel größer als 2 µm zu kontrollieren (1,2,3).

Auch die Synthese mittels Ammoniak aus der Reaktion von Mg²⁺ und F⁻ in wässriger Lösung kann genutzt werden, um Partikel mit Größen von ca. 6 nm bis ca. maximal 300 nm und Morphologien von kugelförmig bis kubisch zu erreichen, die durch ein geeignetes F:Mg-Verhältnis hergestellt werden können (2).

Die Sol-Gel-Synthese mittels HF erfordert eine inerte Atmosphäre unter Argon-Gas und eine Schlenk-Apparatur. Der Reinigungsprozess der Partikel ist langwierig und erfordert große Mengen an Alkohol als Lösungsmittel. Die resultierende Größenverteilung liegt zwischen 10-20 nm (4). Auch die Sol-Gel-Methode über Acetat ist nicht geeignet für die Synthese in großem Maßstab. Dies liegt daran, dass im ersten Schritt der Reaktion zwischen Magnesium und Methanol große Mengen an Wasserstoff freigesetzt werden (5).

Eine Umgestaltung der Synthese mit handelsüblichem Magnesiumethoxid als Ausgangsmaterial ist auch nicht ist ebenfalls ungeeignet für den angedachten Zweck, da dieses in Methanol oder Ethanol unlöslich ist (5). Daher stehen keine transparenten Solen zur Verfügung, da sich eine schützende MgF₂-Schicht auf den suspendierten festen Mg(OEt)₂ auf die Vorläuferpartikeln absetzt (5).

Eine alternative Route mit MgCl₂ als Edukt ist recht einfach durchzuführen, leidet aber unter der stöchiometrischen Bildung von HCl aus MgCl₂ als Ergebnis der Reaktion mit HF (5,6). HCl ist sehr korrosiv, eine praktische Anwendung solcher Sols nicht zu empfehlen. Der Syntheseweg über ionische Flüssigkeiten kann jedoch als Ersatz für eine Fluorquelle verwendet werden, anstatt mit großen Mengen HF zu arbeiten. Die Sonifikation wurde bisher nur für die Herstellung aktiver MgF₂-Biofilme berichtet (7); eine entsprechende Anwendung zur Synthese von Partikeln ist nicht möglich und daher auch nicht bekannt.

Schließlich wurde die Synthese mit Meerwasser als kostengünstige Methode beschrieben (8). Allerdings wird die Verwendung von Meerwasser für die industrielle Synthese durch Umweltprobleme eingeschränkt. Darüber hinaus sind die Auswirkungen anderer chemischer Stoffe im Meerwasser noch nicht vollständig verstanden und untersucht worden im Hinblick darauf, wie sie die Größenverteilung der Partikel beeinflussen.

Die Dotierung von MgF₂-Kügelchen mit Aktivatoren wie Lanthaniden ist ein nützlicher Schritt zur weiteren Funktionalisierung der Perlen. Dies wurde von Cortelletti et al. für kleine CaF₂- und SrF₂-Partikel sowie für Schüttgut gezeigt (9).

Ausgehend von diesem bekannten Stand der Technik kann die vorliegende Aufgabe darin gesehen werden MgF₂-Partikel bereitzustellen, die bevorzugt im sichtbaren oder nahen Infrarotbereich Licht emittieren und als photostabile farbstofffreie Marker verwendet werden können, worunter zusammenfassend labelfreie Marker gemeint sind.

Nach Anspruch 1 wird ein Zellimitat bereitgestellt, welches ein sphärisches Materialgebilde mit einem Durchmesser von etwa 5µm bis etwa 15µm aufweist, wobei das Material Magnesiumfluorid aufweist.

Unter einem Zellimitat gemäß der Erfindung kann ein Partikel zum Imitieren einer Zelle verstanden werden, also ein Partikel, bei dem zumindest eine Eigenschaft, insbesondere eine optische Eigenschaft und eine Größeneigenschaft, denen einer somatischen Zelle entspricht. Insofern kann von dem Zellimitat auch von einem Zellphantom gesprochen werden. Das Zellimitat kann aufgrund seiner Eigenschaften verwendet werden, um bei einem optischen Messystem eine Kalibrierung und/oder Einstellung vorzunehmen. Das sphärische Materialgebilde kann insbesondere ein im Wesentlichen kugelförmiges Partikel aufweisen.

Das erfindungsgemäße Partikel kann so eingerichtet sein, dass es die Größe und die optischen Eigenschaften somatischer Zellen nachbildet. Ein Ensemble von erfindungsgemäßen Partikeln kann vorteilhafterweise für die Kalibrierung sowie für die Prüfung und Testung der Systemleistung und deren Optimierung unter möglichst realistischen Messbedingungen in der quantitativen Phasenbildgebung (QPI), wie sie die digitale holografische Mikroskopie und verwandte Techniken bereitstellen, etwa die optische Kohärenztomographie (OCT), verwendet werden sowie in der markerfreien Durchflusszytometrie (FCM) und in verbundenen bildgebenden Durchflusszytometrieverfahren. Diese Verwendung eines Ensembles von Zellimitaten, kann im Rahmen eines dieser Verfahren erfolgen.

Die Verwendung eines Ensembles von Zellimitaten ermöglicht die Kalibrierung und Validierung von markierungsfreien Messsystemen wie quantitativen Phasenmikroskopen, tomographischen Phasenmikroskopie-Systemen, hochauflösenden OCT-Systemen und Durchflusszytometern für die Analyse lebender Zellen unter sehr realistischen Bedingungen. Durch die Langlebigkeit des Zellimitats kann dieses wiederholt über einen langen Zeitraum verwendet werden, so dass ein initial eingestelltes bzw. kalibriertes Messystem auf mögliche Veränderung seiner Betriebsparameter hin überwach und nachjustiert werden kann.

Die erfindungsgemäßen sphärischen Gebilde, bevorzugt Kugeln, weisen Magnesiumfluorid (MgF₂) auf und vereinen alle Anforderungen für markierungsfreie Bildgebungsstandards. Sie sind rund bzw. sphärisch, haben Dimensionen, welche im Bereich von Zellgrößen liegen, weisen eine gute Haltbarkeit auf und haben einen Brechungsindex, welcher im Bereich des zellulären Brechungsindex liegt. Die sphärischen Materialgebilde gemäß der Erfindung ermöglichen eine Kalibrierung und Validierung markierungsfreier Messsysteme für die Analyse von lebenden Zellen unter sehr realistischen Messbedingungen. Bei der Erfindung kommt Magnesiumfluorid als ein langlebiges Material zur Anwendung, welches einen Brechungsindex und Größeneigenschaften aufweist, die denen von lebenden Zellen und Gewebe nahekommen. Darüber hinaus kann auf Basis der vorliegenden Erfindung in Kombination mit geeigneten Einbettungsmaterialien die Herstellung neuartiger, dauerhafter Gewebephantome mit optischen Eigenschaften (insbesondere Brechungsindex) und Größenverhältnissen erfolgen, die im Wesentlichen denen von lebenden biologischen Präparaten entsprechen. Das Zellimitat besteht aus Magnesiumfluorid.

Ein weiterer Teil der vorliegenden Erfindung betrifft ein Verfahren zum Herstellen bzw. Synthetisieren von Magnesiumfluorid-Partikeln in Zellgröße. Magnesiumfluorid ist bisher nur als Bulkmaterial (Schüttgut) oder als Material und in Form von Nanopartikeln verfügbar. Zur Umsetzung der vorliegenden Erfindung und der Bereitstellung von Partikeln aus Magnesiumfluorid als Zellenstandards bedarf es einer Synthese von kugelförmigen Partikeln im Größenbereich von 5 µm bis 15 µm. Die hergestellten Partikel können mit Fluoreszenzfarbstoffen funktionalisiert oder mit lumineszierenden Spezies dotiert werden, was einen breiteren Einsatz auch für fluoreszenzbasierte Bildgebungsverfahren ermöglicht.

Die vorliegende Erfindung bringt zahlreiche Vorteile mit sich. So können die erfindungsgemäßen Zellimitate bei optischen Messsystemen verwendet werden, um diese mit dauerhaft haltbaren Teststandards zu kalibrieren/validieren/optimieren. Die hierfür verwendeten Zellimitate können bevorzugt optische Eigenschaften und Größeneigenschaften aufweisen, die denen von lebenden zellulären Proben entsprechen, so dass damit sehr realistische Bedingungen geschaffen werden können. Zellimitate mit diesen Eigenschaften können wesentlich zu einer zuverlässigeren Systemcharakterisierung und Systemkalibrierung, zu effektiveren Systemkonfigurationen sowie zu anspruchsvollen Ausrichtungen innerhalb des Gesamtsystems und verbesserter Systemvalidierung beitragen. Ferner können die Zellimitate gemäß der vorliegenden Erfindung zur Erhöhung der Messgenauigkeit beitragen, die insbesondere für die Erkundung und Erschließung neuer Anwendungsbereiche und Märkte erforderlich ist. Die neuen Kalibrierungs- und Validierungsstandards auf Basis der hierin offenbarten Zellimitate eröffnen Märkte für die klinische Diagnostik und industrielle Anwendungen für quantitative Phasenbildgebung, tomographische Phasenmikroskopie, OCT, Durchflusszytometrie, bildgebende Durchflusszytometrie.

Gemäß weiteren Ausführungsformen des Zellimitats kann das Materialgebilde einen Brechungsindex im Bereich von etwa 1,3-1,4 aufweisen, bevorzugt im Bereich von etwa 1,35-1,36. Eine derartige Wahl des Brechungsindex ist deshalb vorteilhaft, weil sie im Bereich des Brechungsindex von somatischen Zellen liegt und dem erfindungsgemäßen Zellimitat die Eignung verleiht, somatische Zellen hinsichtlich ihrer optischen Eigenschaften nachzuahmen.

Gemäß weiteren Ausführungsformen des Zellimitats kann das sphärische Materialgebilde eine Dotierung aufweisen, die ein fluoreszierendes und/oder lumineszierendes Material aufweist.

Gemäß weiteren Ausführungsformen des Zellimitats kann das Materialgebilde einen Durchmesser im Bereich von etwa 5 µm bis etwa 15 µm aufweisen.

Erfindungsgemäß wird ein Ensemble von Zellimitaten bereitgestellt, bei dem mindestens 99% der Zellimitate einen Durchmesser haben, welcher um maximal 5% von dem Mittelwertwert der Durchmesser abweicht. Anders ausgedrückt das Ensemble eine monodisperse Vielzahl von Zellimitaten aufweisen, welches damit ein im Wesentlichen homogenes optisches Verhalten zeigt.

Erfindungsgemäß wird eine Verwendung des hierin beschriebenen Ensembles von Zellimitaten bereitgestellt, zum Nachbilden bzw. Simulieren eines optischen Verhaltens von Zellen in einem bildgebenden Verfahren. Bei den Zellen, deren Verhalten simuliert werden soll, kann es sich insbesondere um somatische Zellen handeln.

Gemäß einem Ausführungsbeispiel der erfindungsgemäßen Verwendung kann es sich bei dem bildgebenden Verfahren um eine quantitative Phasenkontrastabbildung oder eine markerfreie Durchflusszytometrie handeln. Grundsätzlich kann es sich bei dem bildgebenden Verfahren um jedes beliebige bildgebende Verfahren handeln, etwa um eines von den bereits zuvor erwähnten Verfahren. Die Bildgebung kann auf Basis elektromagnetischer Strahlung im sichtbaren Wellenlängenspektrum erfolgen oder aber auch bei anderen Wellenlängen, etwa im IR-Bereich oder im UV-Bereich.

Gemäß einem Ausführungsbeispiel der erfindungsgemäßen Verwendung kann diese während eines Kalibrationsvorgangs und/oder eines Funktionsüberprüfungstests der das bildgebende Verfahren ausführenden Vorrichtung erfolgen. Die Verwendung kann dabei im Rahmen einer ersten Kalibration oder einer ersten Funktionsüberprüfung erfolgen oder wiederholt zwecks Optimierung des Vorgangs.

Erfindungsgemäß wird ferner ein Verfahren zum Herstellen eines sphärischen Materialgebildes, bevorzugt mit einem Durchmesser von mindestens 3 µm, wobei das Material Magnesiumfluorid aufweist, wobei das Verfahren die folgenden Schritte umfasst:
(i) Mischen von Magnesiumnitrat und Natriumdihydrogenphosphat in Wasser;
(ii) Hinzufügen einer Säure zum Lösen des in Schritt (i) ausgefallenen Salzes;
(iii) Einstellen des pH-Werts auf etwa 6 bis etwa 8;
(iv) Erwärmen der Mischung auf maximal 45°C;
(v) Hinzufügen einer Fluoridquelle und Mischen bei maximal 45°C; und
(vi) Erhitzen der Mischung in einem Autoklaven bei etwa 150°C bis etwa 250°C, um das sphärische Materialgebilde zu erhalten.

Gemäß einer Ausführungsform des erfindungsgemäßen Verfahrens kann das Magnesiumnitrat Mg(NO₃)₂*6H₂O sein und/oder das Natriumdihydrogenphosphat kann NaH₂PO₄*2H₂O sein.

Gemäß einer Ausführungsform des erfindungsgemäßen Verfahrens kann die Konzentration von Magnesiumnitrat und Natriumdihydrogenphosphat jeweils etwa 0,05 mol/L bis etwa 2,0 mol/L, vorzugsweise jeweils etwa 0,13 mol/L betragen.

Gemäß einer Ausführungsform des erfindungsgemäßen Verfahrens kann in Schritt (i) ferner ein Lanthanoid-Nitrat mit dem Magnesiumnitrat und dem Natriumdihydrogenphosphat in Wasser gemischt werden.

Gemäß einer Ausführungsform des erfindungsgemäßen Verfahrens kann die Menge des Lanthanoid-Nitrats etwa 0.01 mol-% bis etwa 20 mol-%, vorzugsweise etwa 1 mol-%, jeweils bezogen auf eine Gesamtmenge an Lanthanoid-Nitrat und Magnesiumnitrat von 100 mol-% betragen.

Gemäß einer Ausführungsform des erfindungsgemäßen Verfahrens kann das Lanthanoidnitrat Europiumnitrat, vorzugsweise Eu(NO₃)₃*2H₂O, oder Terbiumnitrat, vorzugsweise Tb(NO₃)₃*2H₂O, sein.

Gemäß einer Ausführungsform des erfindungsgemäßen Verfahrens kann in Schritt (ii) die Säure Salzsäure (HCl) sein.

Gemäß einer Ausführungsform des erfindungsgemäßen Verfahrens kann in Schritt (iii) der pH-Wert auf etwa 6,5 bis etwa 7,0 eingestellt werden.

Gemäß einer Ausführungsform des erfindungsgemäßen Verfahrens können die Schritte (i) bis (iii) bei Raumtemperatur (vorzugsweise etwa 15°C bis etwa 25°C) durchgeführt werden.

Gemäß einer Ausführungsform des erfindungsgemäßen Verfahrens kann die Mischung in Schritt (iv) auf maximal 45°C erwärmt werden, bevorzugt auf maximal 40°C und noch weiter bevorzugt auf ca. 37°C. Bei einer zu hohen Temperatur kann die dazugehörige Reaktion weniger gut kontrolliert werden und die Größenverteilung wird breiter. Unter diesem Aspekt ist eine Temperatur von maximal 45°C vorteilhaft. Bei unter 40°C, z.B. bei 37°C erhält man selbst bei ungleichmässiger Wärmeübertragung eine realtiv homogene Größenverteilung.

Gemäß einer Ausführungsform des erfindungsgemäßen Verfahrens kann in Schritt (iv) das Erwärmen der Mischung mit einer Rate von etwa 5°C/min bis etwa 20°C/min, vorzugsweise mit einer Rate von etwa 10°C/min, durchgeführt werden.

Gemäß einer Ausführungsform des erfindungsgemäßen Verfahrens kann Schritt (iv) in einem Autoklaven durchgeführt werden.

Gemäß einer Ausführungsform des erfindungsgemäßen Verfahrens kann das Hinzufügen der Fluoridquelle und Mischen in Schritt (v) bei maximal 45°C durchgeführt werden, bevorzugt bei maximal 40°C und noch weiter bevorzugt bei ca. 37°C. Hinsichtlich der gewählten Temperaturen gilt das Gleiche wie bei der zuvor erläuterten Temperaturwahl bei der Erwärmung der Mischung in Schritt (iv).

Gemäß einer Ausführungsform des erfindungsgemäßen Verfahrens kann die Fluoridquelle eine ionische Flüssigkeit, vorzugsweise 1-Butyl-3-methylimidazoliumtetrafluoroborat ([BMIM(BF4)]), sein.

Gemäß einer Ausführungsform des erfindungsgemäßen Verfahrens kann das Erhitzen in Schritt (vi) bei etwa 200°C durchgeführt werden. Bei der Durchführung des Verfahrens in einem dicht verschlossenen Behälter, z.B. einem Autoklaven, kann der Druck im Bereich von etwa 150 bar bis etwa 250 bar liegen, bevorzugt in einem Bereich von 175 bar bis etwa 225 bar und weiter bevorzugt bei etwa 200 bar.

Gemäß einer Ausführungsform des erfindungsgemäßen Verfahrens kann wobei das Erhitzen in Schritt (vi) für etwa 1 Tag bis etwa 6 Tage, vorzugsweise für etwa 4 Tage, durchgeführt werden kann.

Gemäß einer Ausführungsform des erfindungsgemäßen Verfahrens kann dieses ferner Abkühlen der Mischung nach Schritt (vi) aufweisen, etwa auf Raumtemeratur.

Gemäß einer Ausführungsform des erfindungsgemäßen Verfahrens kans kann dieses ferner Isolieren des erhaltenen sphärischen Materialgebildes aufweisen, vorzugsweise durch Zentrifugieren.

Gemäß einer Ausführungsform des erfindungsgemäßen Verfahrens kann dieses ferner Waschen des sphärischen Materialgebildes aufweisen, vorzugsweise mit Wasser und/oder Ethanol.

Gemäß einer Ausführungsform des erfindungsgemäßen Verfahrens kann dieses ferner Dispergieren des sphärischen Materialgebildes in Wasser aufweisen.

Gemäß einer Ausführungsform des erfindungsgemäßen Verfahrens kann dieses ferner Trocknen des sphärischen Materialgebildes aufweisen.

Gemäß einer Ausführungsform des erfindungsgemäßen Verfahrens kann das sphärische Materialgebilde wie in einer der zuvor beschriebenen Ausführungsformen definiert sein.

Weitere Vorteile und Ausgestaltungen der Erfindung ergeben sich aus der Beschreibung und der beiliegenden Zeichnungen.
Figur 1 zeigt energiedispersive Röntgenspektroskopiedaten der Zusammensetzung der erfindungsgemäßen Zellimitate.
Figuren 2A-2C zeigen eine Rastertransmissionselektronenmikroskopieaufnahme und die Rekonstruktion der räumlichen Lokalisation von Magnesium und Fluor aus ortsaufgelösten energiedispersiven Röntgenspektroskopiedaten undotierter Zellimitate.
Figur 3 zeigt eine mittels eines Feldemissionsrasterelektronenmikroskops gemachte Aufnahme der Zellimitate gemäß einem Ausführungsbeispiel der vorliegenden Erfindung.
Figur 4 zeigt ein Anregungs- und drei Emissionsspektren von mit Europium dotierten Zellimitaten gemäß einem Ausführungsbeispiel der vorliegenden Erfindung.
Figur 5 zeigt Anregungsspektren bei zwei unterschiedlichen Anregungswellenlängen von mit Europium dotierten Zellimitaten gemäß einem Ausführungsbeispiel der vorliegenden Erfindung.
Figur 6 zeigt Emissionsspektren von mit Terbium dotierten Zellimitaten gemäß einem Ausführungsbeispiel der vorliegenden Erfindung.
Figur 7 zeigt ein Anregungsspektrum von mit Terbium dotierten Zellimitaten gemäß einem Ausführungsbeispiel der vorliegenden Erfindung.

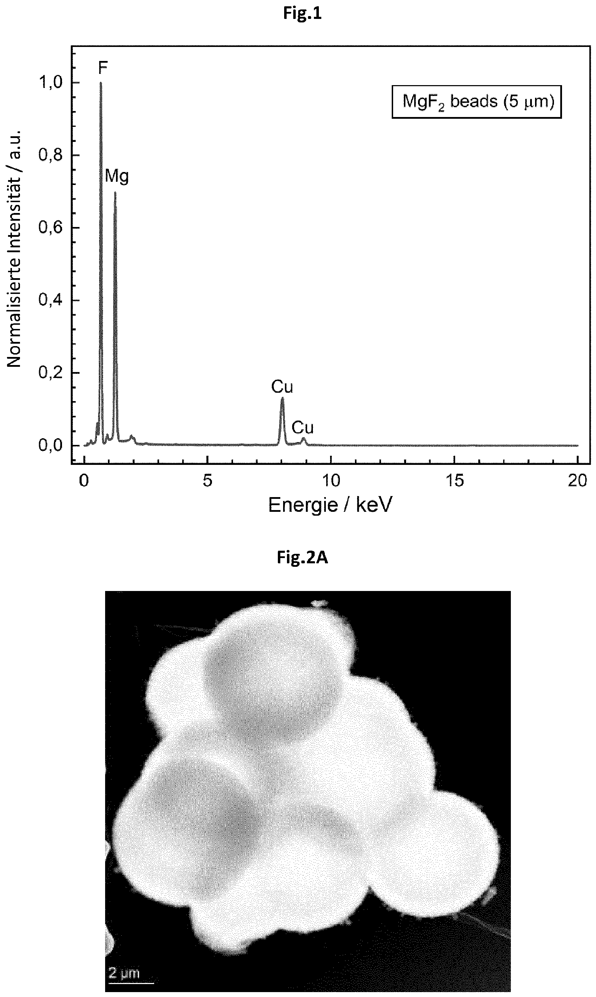

In Figur 1 ist ein energiedispersives Röntgenspektrum einer Probe gezeigt, welches mit einem Raster-Transmissionselektronenmikroskop aufgezeichnet worden ist (scanning transmission electron microscope energy dispersive X-ray analysis (STEM-EDX). Auf der x-Achse ist die Energie in Kiloelektronenvolt aufgetragen und auf der y-Achse die Intensität des aufgezeichneten Röntgensignals in willkürlichen Einheiten. Die der Röntgenanalyse zugrunde liegende Probe besteht aus einer Vielzahl von Partikeln bzw. Kügelchen aus reinem Magnesiumfluorid. Das aufgezeichnete Signal bestätigt das Vorhandensein von Magnesium und Fluorid, wobei das Verhältnis 35,51 Gew.% für Magnesium zu 60,05 Gew.% für Fluorid beträgt (auf das Atomgewicht bezogen). Der Rest von 4,44 Gew.% fällt Kohlenstoff und Kupfer zu, die im TEM-Gitter enthalten sind, auf dem die Probe während der Untersuchung angeordnet ist. Das Kohlenstoff-Signal, dessen Maximum bei 0,28 keV liegt, ist von dem starken Fluor-Signal bei 0,68 keV verdeckt und daher in dem Diagramm nicht sichtbar. Die beiden Kupfer-Signale stammen von zwei unterschiedlichen Kupfer-Übergängen (Cu-Kα bei 8 keV und Cu-Kβ bei 8,9 keV).

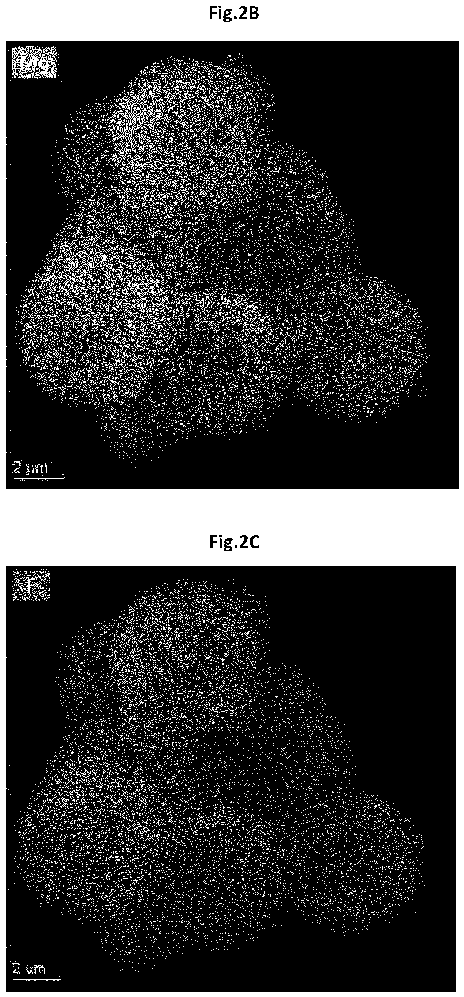

In den Figuren 2A-2C sind die räumlichen Strukturen der Zellimitate aus Daten rekonstruiert worden, die mittels eines Raster-Transmissionselektronenmikroskops in Kombination mit einem energie-dispersiven Röntgenspektrometer erhalten worden sind. Bei der Probe handelt es sich um eine Vielzahl von Zellimitaten aus reinem Magnesiumfluorid. In Figur 2A ist die räumliche Struktur der Zellimitate aus dem kumulierten Antwortsignal rekonstruiert worden. In Figur 2B ist die räumliche Struktur der Zellimitate aus dem vom Magnesium stammenden Antwortsignal rekonstruiert worden und in Figur 2C ist die räumliche Struktur der Zellimitate aus dem vom Fluorid stammenden Antwortsignal rekonstruiert worden. Durch vergleich der Rekonstruktionen sieht man, dass die Antwortsignale von den Magnesium-Atomen (Fig. 2B) und die Antwortsignale von den Fluorid-Atomen (Fig. 2C) kolokalisiert sind. Insgesamt sieht man ferner, dass es sich bei den Zellimitaten um sphärische Material- bzw. Stoffgebilde handelt.

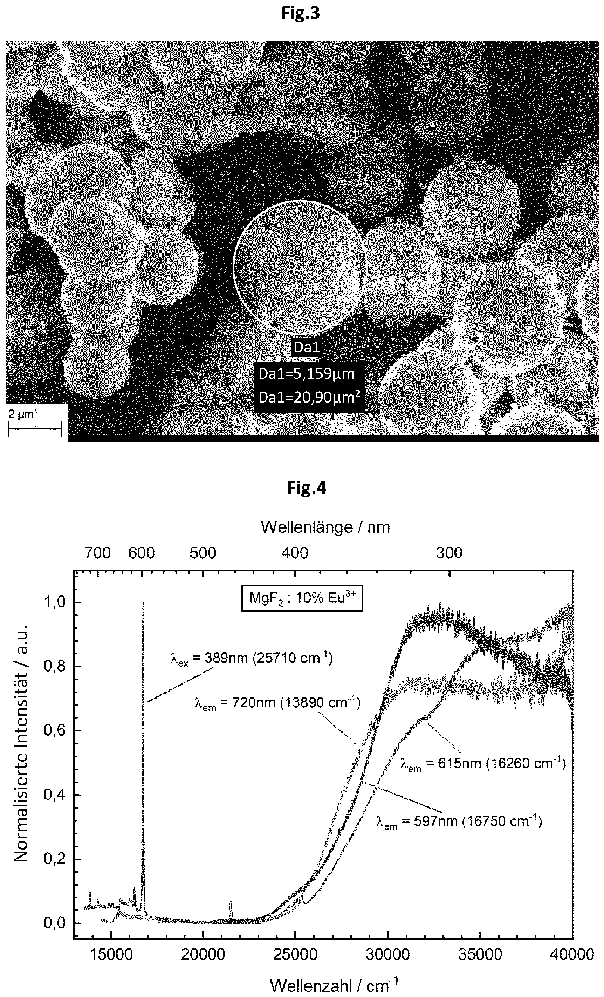

In Figur 3 ist eine weitere Aufnahme eines Ensembles von Zellimitaten gezeigt, die mit einem Feldemissionsrasterelektronenmikroskop gemacht worden ist. Die untersuchte Probe weist demzufolge sphärische Partikel aus reinem Magnesiumfluorid auf, die im Mittel einen Durchmesser von 5,2 µm ±0,2 µm aufweisen.

In Figur 4 sind ein Emissionsspektrum und drei Anregungsspektren von mit Europium dotierten Zellimitaten gezeigt. Hierbei ist auf der unteren x-Achse die Wellenzahl in 1/cm und auf der oberen x-Achse die entsprechende Wellenlänge in Nanometern aufgetragen. Auf der y-Achse ist die normalisierte Intensität in willkürlichen Einheiten (a.u.) aufgetragen. Das Emissionsspektrum, dessen diskreter Peak bei ca. 600 nm liegt, zeigt die Emission bei einer Anregungswellenlänge von 389 nm (25710 cm⁻¹). Die Anregungsspektren wurden für Emissionswellenlängen von 720 nm (13890 cm⁻¹), 615 nm (16260 cm⁻¹) und 597 nm (16750 cm⁻¹) aufgenommen, und zwar von Zellimitaten aus Magnesiumfluorid, die mit 10% Eu³⁺ dotiert worden sind (MgF₂: 10% Eu³⁺). Aus der Beobachtung dieser Signale kann das Vorliegen des Europiums in der Oxidationstufe +3 nachgewiesen werden.

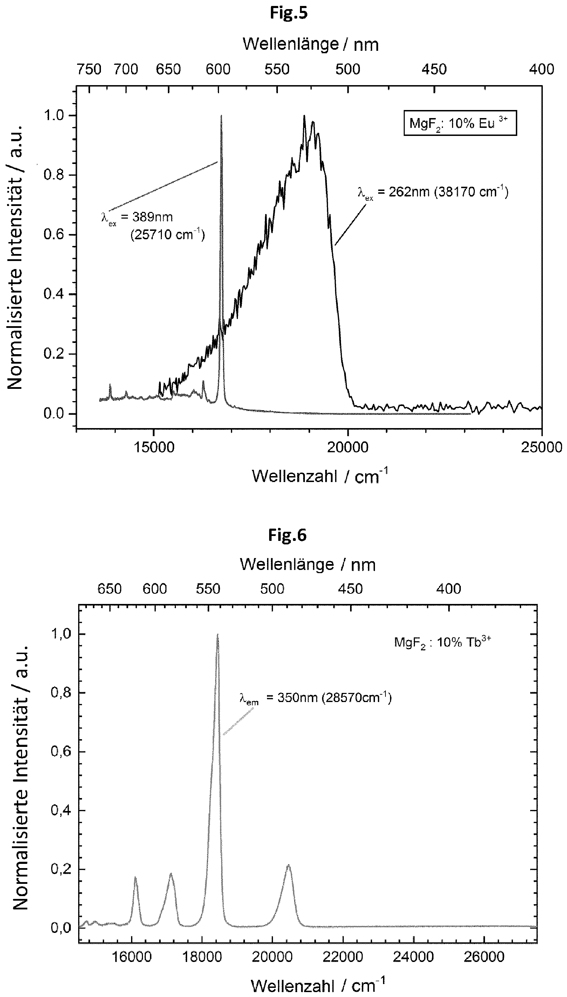

In Figur 5 sind Emissionspektren bei zwei unterschiedlichen Anregungswellenlängen von mit Europium dotierten Zellimitaten gemäß einem Ausführungsbeispiel der vorliegenden Erfindung dargestellt. Die Achsenbeschriftung des Diagramms entspricht der von Figur 4. Durch Vergleich der Emissionsspektren in Figur 5 sieht man, dass die Emission im roten Wellenlängenbereich bei einer Anregungswellenlänge von 389 nm (25710 cm⁻¹) deutlich stärker ist als bei kurzwelliger Anregung (262 nm).

In Figur 6 ist ein Emissionsspektrum von Zellimitaten gezeigt, die mit 10% Terbium dotiert sind (MgF₂: 10% Tb³⁺). Die Probe wurde bei einer Wellenlänge von 350 nm (28570 cm⁻¹) angeregt. Wie in Figur 4 ist auf der unteren x-Achse die Wellenzahl in 1/cm und auf der oberen x-Achse die entsprechende Wellenlänge in Nanometern aufgetragen. Auf der y-Achse ist die normalisierte Intensität in willkürlichen Einheiten (a.u.) aufgetragen. Die stark ausgeprägte Emission im grünen Wellenlängenbereich ist durch ein ausgeprägtes Energieband bei 544 nm (18380 cm⁻¹) bedingt.

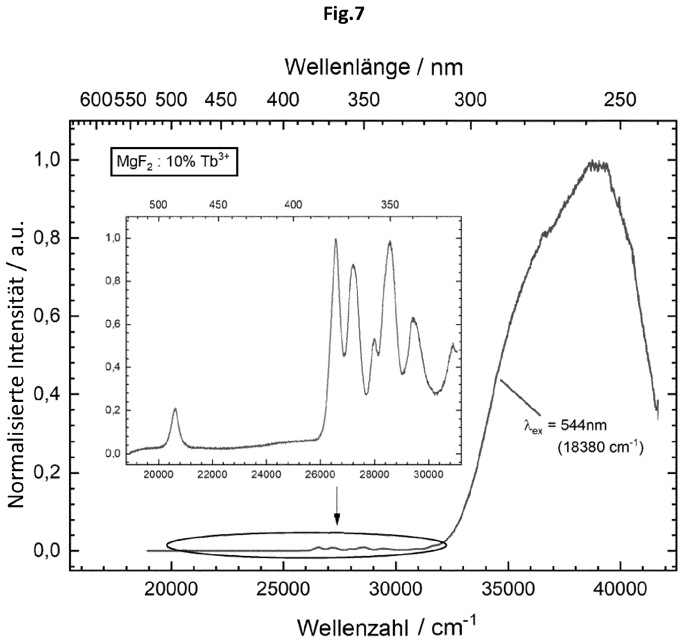

In Figur 7 ist schließlich ein Anregungsspektrum einer Probe bei einer Emissionswellenlänge von 544 nm (18380 cm⁻¹), also im grünen Wellenlängenbereich, gezeigt. Wie in den Figuren 4 und 6 ist auf der unteren x-Achse die Wellenzahl in 1/cm und auf der oberen x-Achse die entsprechende Wellenlänge in Nanometern aufgetragen. Auf der y-Achse ist die normalisierte Intensität in willkürlichen Einheiten (a.u.) aufgetragen. Bei der Probe handelt es sich, wie in bei der Probe in Figur 6, um Zellimitate, die mit 10% Terbium dotiert sind (MgF₂: 10% Tb³⁺). Anhand des Anregungsspektrum kann man sehen, dass es möglich ist, die mit Terbium dotierten Zellimitate in etwa zwischen 250 nm (40000 cm⁻¹) und 300 nm (33330 cm⁻¹) anzuregen, um eine starke Emission im grünen Wellenlängenbereich hervorzurufen.

Die zuvor beschriebenen Partikel gemäß der Erfindung eignen sich sehr gut für die labelfreie Bildgebung mit digitaler Holographie-basierter quantitativer Phasenbildgebung (QPI) und tomographischer Phasenmikroskopie. Aus der Untersuchung von QPI-Aufnahmen der erfindungsgemäßen Partikel kann auf die Größen- und Brechungsindexeigenschaften der Partikel geschlossen werden, die denen von lebenden somatischen Zellen (Durchmesser 5 µm, Brechungsindex 1,35-1,36) ähnlich sind. Zusammenfassend zeigen die Ergebnisse, dass sphärische Magnesiumfluoridpartikel mit Größe und Brechungsindex hergestellt werden können, die denen von somatische Zellen ähneln und sich daher sehr gut als dauerhafte Referenzmaterialien für QPI-Messungen und neue, anwendungsbezogene Kalibrierungsverfahren in der Durchflusszytometrie eignen.

Die erfindungsgemäßen Partikel können hergestellt werden, in dem ein spezieller Mechanismus bei deren Synthese verwendet wird, welcher eine verbesserte Kontrolle über das Wachstum von MgF₂-Partikeln ermöglicht. Insbesondere können so sphärische Partikel aus MgF₂ hergestellt werden, die einen Durchmesser von 5 µm und größer aufweisen. Die Erfindung umfasst einen neuen Syntheseweg mit mindestens drei möglichen Wegen zur Herstellung monodisperser MgF₂-Partikeln mit Durchmessern von mehr als 5 µm.

Wie vorstehend gezeigt, können darüber hinaus dotierte MgF₂-Partikel, wie z. B. MgF₂:Xn³⁺ (wobei Xn=Eu/Tb) hergestellt werden, die im sichtbaren Bereich des elektromagnetischen Spektrums emittieren können, wobei der Dotierstoff keinesfalls auf die genannten Eu- oder Tb-Ionen beschränkt ist.

Die als Probe verwendeten sphärischen MgF₂-Partikel mit einem Durchmesser von ca. 5 µm können durch hydrothermale Synthese in einem Autoklaven als Reaktionsgefäß in einer ionischen Flüssigkeit hergestellt werden. Beispielsweise kann hier 1-Butyl-3-Methylimidazolium Tetrafluoroborat [BMIM(BF₄)] verwendet worden. Als Edukte wurden hochreines 99,9%iges Mg(NO₃)₂*6H₂O, NaH₂PO₄*2H₂O, Eu(NO₃)₃*2H₂0 und Tb(NO₃)₃*2H₂0 verwendet.

Durch den systematischen Einsatz und Wechsel von Übersättigung, pH-Wert, Temperatur, Druck und Zeit kann die Reaktionsgeschwindigkeit und das Wachstum der Partikel kontrolliert werden. Die Partikelgröße kann bis auf einen Durchmesser von 5 µm oder mehr gebracht werden (i) in der Mikrowelle oder (ii) im hydrothermalen Autoklaven oder (iii) durch eine Kombination beider Methoden. Das Mikrowellenverfahren ist schneller, erfordert aber mehrere Schritte und ist teurer. Das Verfahren in einem hydrothermalen Autoklaven ist einfach und ergibt in der Regel 0,50 g Material pro Charge. Das Ergebnis sind sphärische Partikel, die sich durch Selbstzusammensetzung von MgF₂-Vorläufern in Form von Nano-Haarkristallen bilden.

Der optionale Dotierungsprozess mit Nn³⁺ beinhaltet einen zweistufigen Mechanismus: 1) *in*situ Hydrolyse der gebildeten XnPO₄-Salze und 2) Anpassung des pH-Werts der resultierenden Lösung auf 6,5 und 7,0 vor dem Erhitzen.

Ein beispielhafter Verlauf einer Synthese, mittels welcher die erfindungsgemäßen Partikel hergestellt werden können, kann die folgenden Schritte aufweisen:
i) Bereitstellen einer 0,13 M Lösung von Mg(NO₃)₂*6H₂O und NaH₂PO₄*2H₂O in 8,75 mL Wasser. Hierbei kann bevorzugt Wasser mittels eines Filters (z.B. Teflonfilter) mit einer Porengröße von 0,2 µm gefiltert worden.
ii) Schrittweises Hinzufügen von HCl, bis sich das ausgefallene Salz aufgelöst hat.
iii) Optionales Einstellen des pH-Werts auf ca. 6,5-7,0.
iv) Mischen der Lösung in einem Reaktor, bevorzugt in einem Autoklav, welcher als Reaktor für die hydrothermale Synthese fungiert. Das Innenvolumen kann beispielsweise 75 mL betragen.
v) Erwärmen der Lösung in dem Reaktor auf maximal 37°C (bevorzugt bei 10°C/min), um eine Nukleation von Magnesiumfluorid herbeizuführen.
vi) Hinzufügen von 3 mL einer ionischen Flüssigkeit (bevorzugt 1-Butyl-3-methylimidazoliumtetrafluoroborat) zu der Lösung unter Rühren bei ca. 37°C, bis eine homogen trübe Lösung entsteht.
vii) Vorheizen des Reaktors auf 50°C für 30 Minuten auf einer Heizplatte, danach Einbringen des Reaktors in einen vorgeheizten Ofen, Erhitzen bei einer Temperatur von ca. 200°C für vier Tage. Die konkrete Ausgestaltung dieses Schrittes ist optional und kann mit anderen Parametern durchgeführt werden. Bei diesem Schritt setzt die Bildung der erfindungsgemäßen Partikel ein. Hierbei spielt der Druck innerhalb des Reaktors eine wichtige Rolle beim Wachstum der Partikel bis zu einer Größe von ca. 2.5 µm. Die Synthese erfolgt im geschlossenen Reaktor so dass der Druck nicht direkt in der Kammer gemessen werden muss, sondern ausgehend vom bekannten Innenvolumens des Reaktors in Kombination mit der Wahl der Temperatur mittelbar festgelegt werden kann.
viii) Schnelles Überführen des Inhalts des Reaktors in eine Zentrifuge, nachdem dieser auf Raumtemperatur abgekühlt ist.
ix) Zentrifugieren des abgekühlten Inhalts des Reaktors in der Zentrifuge (bevorzugt bei 6000 Umdrehungen/Minute für 5 Minuten).
x) Dekantieren des Überstands und Hinzufügen von 11 mL Ethanol.
xi) Wiederholen des Zentrifugierens, dreimal mit Ethanol und dann nachfolgend zweimal mit Wasser.
xii) Dispergieren der Partikel in 11 mL Wasser.
xiii) In einem optionalen Schritt kann die Substanz, die nach den Zentrifugierprozessen vorliegt, getrocknet werden. Dies kann beispielsweise bevorzugt bei Normaldruck bei 60°C für 1h erfolgen.

Falls die erfindungsgemäßen Partikel um die Eigenschaft einer Photolumineszenz erweitert werden sollen, kann hierfür bevorzugt ein Mikrowellenschritt verwendet werden, um in einem vorgelagerten Schritt das Ausgangsmaterial (MgF₂) mit Lanthaniden zu dotieren. So werden zunächst dotierte Nano-Whisker unter Verwendung der Mikrowelle herstellt. Diese Nano-Whisker werden dann nach einem Waschschritt in einer zweiten Reaktion mit den Edukten gemischt und zur weiteren Reaktion in den Reaktor gebracht. Es wächst dann eine Hülle um die in der ersten Reaktion hergestellten Whisker. Insgesamt kann dadurch die Photolumineszenz ermöglicht bzw. je nach Dotierungsgrad verstärkt werden.

Um eine Dotierung beispielsweise mit Eu³⁺/Tb³⁺ des Ausgangsstoffes vorzunehmen, kann nach Schritt i) oben die Stöchiometrie von Mg(NO₃)₂*6 H₂0 mit Eu(NO₃)₃*2 H₂O oder Tb(NO₃)₃*2H₂O eingestellt werden, beispielsweise in einem Bereich zwischen einigen wenigen Prozent bis etwa 20% Eu³⁺/Tb³⁺, beispielsweise 10%. Um das ausgefällte Phosphatsalz aufzulösen kann HCl tropfenweise hinzugegeben werden (gemäß Schritt ii) oben). Der pH-Wert kann durch Zugabe einiger Tropfen pH 10 Puffer auf 6,5 oder 7 eingestellt werden (gemäß Schritt iii) oben). Anschließend können die oben angegebenen Schritte, angefangen bei Schritt iv) ausgeführt werden.

### Literaturverzeichnis

(1) Xu, J.-S.; Zhu, Y.-J. Microwave-Assisted lonic Liquid Solvothermal Rapid Synthesis of Hollow Microspheres of Alkaline Earth Metal Fluorides (MF2, M = Mg, Ca, Sr). CrystEngComm 2012, 14 (8), 2630-2634; https://doi.org/10. j039/C2CE06619J
(2) Nandiyanto, A. B. D.; Iskandar, F.; Ogi, T.; Okuyama, K. Nanometer to Submicrometer Magnesium Fluoride Particles with Controllable Morphology. Langmuir 2010, 26 (14), 12260-12266; https://doi.org/10.1021/la101194w
(3) Sevonkaev, I.; Matijevic, E. Formation of Magnesium Fluoride Particles of Different Morphologies. Langmuir 2009, 25 (18), 10534-10539. https://doi.org/10.1021/la901307t
(4) Noack, J.; Emmerling, F.; Kirmse, H.; Kemnitz, E. Sols of Nanosized Magnesium Fluoride: Formation and Stabilisation of Nanoparticles. J. Mater. Chem. 2011, 21 (38), 15015-15021; https://doi.ora/10.1039/C1JM11943E
(5) Scheureil, K.; Noack, J.; König, R.; Hegmann, J.; Jahn, R.; Hofmann, Th.; Löbmann, P.; Lintner, B.; Garcia-Juan, P.; Eicher, J.; Kemnitz, E. Optimisation of a Soi-Gei Synthesis Route for the Preparation of MgF 2 Particles for a Large Scale Coating Process. Dalton Trans. 2015, 44 (45), 19501-19508. https://doi.Org/10.1039/C5DTQ2196K
(6) Kemnitz, E. Fluorolytic Sol-Gel Processes. In Handbook of Sol-Ge! Science and Technology; Klein, L., Aparicio, M., Jitianu, A., Eds.; Springer Internationa! Publishing: Cham, 2016; pp 1-41; https://doi.org/10.1007/978-3-319-19454-7 114-1
(7) Leilouche, J.; Friedman, A.; Lahmi, R.; Gedanken, A.; Banin, E. Antibiofiim surface functionalization of catheters by magnesium fluoride nanoparticles https://www.dovepress.com/antibiofilm-surface-functionalization-of-catheters-bymagnesium-fluoripeer-reviewed-article-IJN (accessed Apr 14, 2020); https://doi.org/10.2147/IJN.S26770
(8) Qin, T.; Zhang, P.; Qin, W. A Novel Method to Synthesize Low-Cost Magnesium Fluoride Spheres from Seawater. Ceramics International 2017, 43 (16), 14481-14483; https://doi.Org/10.1016/i.ceramint.2017.06.145
(9) Paolo Cortelletti, Marco Pedroni, Federico Boschi, Sonia Pin, Paolo Ghigna, Patrizia Canton, Fiorenzo Vetrone, and Adolfo Speghini Crystal Growth & Design 2018 18 (2), 686-694; https://doi.ora/10.1021/acs.cad.7b01050.

## Patentansprüche

1. Ensemble von Zellimitaten, wobei ein Zellimitat ein sphärisches Materialgebilde mit einem Durchmesser von etwa 5µm bis etwa 15µm aufweist, wobei das Material Magnesiumfluorid aufweist, wobei mindestens 99% der Zellimitate einen Durchmesser haben, welcher um maximal 5% von dem Mittelwertwert der Durchmesser abweicht.

2. Ensemble von Zellimitaten gemäß Anspruch 1, wobei das Materialgebilde einen Brechungsindex im Bereich von etwa 1,3-1,4 aufweist, bevorzugt im Bereich von etwa 1,35-1,36.

3. Ensemble von Zellimitaten gemäß Anspruch 1 oder 2, wobei das sphärische Materialgebilde eine Dotierung aufweist, die ein fluoreszierendes und/oder lumineszierendes Material aufweist.

4. Verwendung eines Ensembles von Zellimitaten gemäß einem der vorhergehenden Ansprüche, zum Nachbilden eines optischen Verhaltens von Zellen in einem bildgebenden Verfahren.

5. Verwendung gemäß Anspruch 4, wobei das bildgebende Verfahren eine quantitative Phasenkontrastabbildung oder eine markerfreie Durchflusszytometrie aufweist.

6. Verwendung gemäß Anspruch 4 oder 5, wobei die Verwendung während eines Kalibrationsvorgangs und/oder eines Funktionsüberprüfungstests der das bildgebende Verfahren ausführenden Vorrichtung erfolgt.

7. Verfahren zur Herstellung eines sphärischen Materialgebildes, bevorzugt mit einem Durchmesser von mindestens 3 µm, wobei das Material Magnesiumfluorid aufweist, umfassend:
(i) Mischen von Magnesiumnitrat und Natriumdihydrogenphosphat in Wasser;
(ii) Hinzufügen einer Säure zum Lösen des in Schritt (i) ausgefallenen Salzes;
(iii) Einstellen des pH-Werts auf etwa 6 bis etwa 8;
(iv) Erwärmen der Mischung auf maximal 45°C;
(v) Hinzufügen einer Fluoridquelle und Mischen bei maximal 45°C; und
(vi) Erhitzen der Mischung in einem Autoklaven bei etwa 150°C bis etwa 250°C, um das sphärische Materialgebilde zu erhalten.

8. Verfahren gemäß Anspruch 7, wobei das Magnesiumnitrat Mg(NO₃)₂*6H₂O ist und/oder wobei das Natriumdihydrogenphosphat NaH₂PO₄*2H₂O ist.

9. Verfahren gemäß Anspruch 7 oder 8, wobei in Schritt (i) ferner ein Lanthanoid-Nitrat mit dem Magnesiumnitrat und dem Natriumdihydrogenphosphat in Wasser gemischt wird.

## Claims

1. Ensemble of cell surrogates, wherein a cell surrogate has a spherical material structure with a diameter of about 5µm to about 15µm, wherein the material comprises magnesium fluoride, wherein at least 99% of the cell surrogates have a diameter that deviates by a maximum of 5% from the mean value of the diameters.

2. An ensemble of cell surrogates according to claim 1, wherein the material structure has a refractive index in the range of about 1.3-1.4, preferably in the range of about 1.35-1.36.

3. An ensemble of cell surrogatess according to claim 1 or 2, wherein the spherical material structure comprises a doping comprising a fluorescent and/or luminescent material.

4. The use of an ensemble of cell surrogates according to any of the preceding claims, to mimic an optical behavior of cells in an imaging method.

5. The use according to claim 4, wherein the imaging method comprises quantitative phase contrast imaging or marker-free flow cytometry.

6. The use according to claim 4 or 5, wherein the use is applied during a calibration process and/or a functional verification test of the apparatus performing the imaging method.

7. Method for the preparation of a spherical material structure, preferably with a diameter of at least 3 µm, wherein the material comprises magnesium fluoride, comprising:
(i) mixing magnesium nitrate and sodium dihydrogen phosphate in water;
(ii) Adding an acid to dissolve the salt precipitated in step (i);
(iii) Setting the pH to about 6 to about 8;
(iv) Heating the mixture to a maximum of 45°C;
(v) Adding a fluoride source and mixing at a maximum of 45°C; and
(vi) Heating the mixture in an autoclave at about 150°C to about 250°C to obtain the spherical material structure.

8. The method of claim 7, wherein the magnesium nitrate is Mg(NO3)₂*6H2O; and/or wherein the sodium dihydrogen phosphate is NaH_{2PO4}*2H2O.

9. The method according to claim 7 or 8, wherein in step (i) a lanthanide nitrate is further mixed with the magnesium nitrate and the sodium dihydrogen phosphate in water.

## Revendications

1. Ensemble de substitut cellulaires, où un substitut cellulaire possède une structure matérielle sphérique d'un diamètre d'environ 5 µm à environ 15 µm, où le matériau est composé de fluorure de magnésium, où au moins 99 % des substituts cellulaires ont un diamètre qui diffère d'un maximum de 5 % de la valeur moyenne des diamètres.

2. Un ensemble de substituts cellulaires selon la revendication 1, dans lequel la structure matérielle a un indice de réfraction d'environ 1,3 à 1,4, de préférence dans la plage d'environ 1,35 à 1,36.

3. Un ensemble de substitutions cellulaires selon la revendication 1 ou 2, dans lequel la structure matérielle sphérique comprend un dopage composé d'un matériau fluorescent et/ou luminescent.

4. L'utilisation d'un ensemble de substitut cellulaires selon l'une quelconque des revendications précédentes, pour imiter un comportement optique des cellules dans une méthode d'imagerie.

5. L'utilisation selon la revendication 4, où la méthode d'imagerie comprend l'imagerie quantitative par contraste de phase ou la cytométrie à flux sans marqueurs.

6. L'utilisation selon la revendication 4 ou 5, où l'utilisation est appliquée lors d'un processus d'étalonnage et/ou d'un test de vérification fonctionnelle de l'appareil effectuant la méthode d'imagerie.

7. Méthode de préparation d'une structure de matériau sphérique, de préférence d'un diamètre d'au moins 3 µm, dans laquelle le matériau est composé de fluorure de magnésium, comprenant :
(i) mélanger du nitrate de magnésium et du phosphate de dihydrogène de sodium dans l'eau ;
(ii) Ajout d'un acide pour dissoudre le sel précipité à l'étape (i) ;
(iii) Régler le pH à environ 6 à 8 ;
(iv) Chauffer le mélange jusqu'à un maximum de 45°C ;
(v) Ajout d'une source de fluor et mélange à un maximum de 45°C ; et
(vi) Chauffer le mélange dans une autoclave à environ 150°C à 250°C pour obtenir la structure sphérique du matériau.

8. La méthode selon la revendication 7, dans laquelle le nitrate de magnésium est Mg(NO3)₂*6H2O ; et/ou dans laquelle le phosphate de dihydrogène de sodium est NaH2PO4*2H2O.

9. La méthode selon la revendication 7 ou 8, dans laquelle à l'étape (i) un nitrate de lanthanide est ensuite mélangé avec le nitrate de magnésium et le dihydrogène phosphate de sodium dans l'eau.
